# EUROPEAN PATENT APPLICATION

(11) **EP 4 722 582 A1**
(43) Date of publication of application: **08.04.2026**
(21) Application number: 24819128.0
(22) Date of filing: 17.05.2024
(51) Int. Cl.: F21S 2/00, B32B 7/023

(54) **LAMINATED FILM**

(30) Priority: 05.06.2023 JP 2023092332
(71) Applicant: Nitto Denko Corporation, Ibaraki-shi, Osaka 567-8680 (JP)
(72) Inventor: KUNO, Jumpei, Ibaraki-shi, Osaka 567-8680 (JP); WENG, Yufeng, Ibaraki-shi, Osaka 567-8680 (JP); NAKAMURA, Kozo, Ibaraki-shi, Osaka 567-8680 (JP)
(74) Representative: Hoffmann Eitle
(86) International application number: PCT/JP2024/018294
(87) International publication number: WO 2024/252895

(57) **Abstract**

A laminated film having high incidence efficiency of light from a light source even when the thickness of the laminated film is reduced can be provided. The laminated film in which a plurality of layers are laminated includes: an end surface along a lamination direction; a light incident surface intersecting the end surface and allowing light from a light source to enter; a light guide layer configured to guide the light entering through the light incident surface; and a light extraction layer including a light extraction part configured to extract the light guided by the light guide layer. A thickness between a first surface and a second surface is 1,000 µm or less. The first surface is a surface of the light extraction layer on a side opposite to a side on which the light guide layer is disposed, and the second surface is a surface of the light guide layer on a side opposite to a side on which the light extraction layer is disposed.

## Description

### TECHNICAL FIELD

The present invention relates to a laminated film.

### BACKGROUND ART

A method of implementing illumination or display with high designability or high entertainment properties by disposing a laminated film on glass, a window, a wall, a floor, a ceiling, or the like has been proposed.

For example, Patent Document 1 discloses a configuration in which a light guide layer having a light-receiving side surface receiving light emitted from a light source, and a light distribution control structure for light propagating in the light guide layer are included.

### RELATED-ART DOCUMENTS

### PATENT DOCUMENTS

Patent Document 1: International Publication No. WO 2022/025067

### SUMMARY OF THE INVENTION

### PROBLEM TO BE SOLVED BY THE INVENTION

However, in the configuration disclosed in Patent Document 1, in a case where the thickness of a laminated film is reduced, light from the light source enters the light guide layer only from an end portion such as a side surface of the light guide layer. Thus, there is room for improvement in incidence efficiency.

An object of the present invention is to provide a laminated film having high incidence efficiency of light from a light source even when the thickness of the laminated film is reduced.

### MEANS TO SOLVE THE PROBLEM

According to an aspect of the present invention, a laminated film in which a plurality of layers are laminated includes: an end surface along a lamination direction; a light incident surface intersecting the end surface and allowing light from a light source to enter; a light guide layer configured to guide the light entering through the light incident surface; and a light extraction layer including a light extraction part configured to extract the light guided by the light guide layer. A thickness between a first surface and a second surface is 1,000 µm or less. The first surface is a surface of the light extraction layer on a side opposite to a side on which the light guide layer is disposed, and the second surface is a surface of the light guide layer on a side opposite to a side on which the light extraction layer is disposed.

### EFFECTS OF THE INVENTION

According to the present invention, a laminated film having high incidence efficiency of light from a light source even when the thickness of the laminated film is reduced can be provided.

### BRIEF DESCRIPTION OF THE DRAWINGS

[FIG. 1] FIG. 1 is a schematic cross-sectional view of a laminated film according to an embodiment; [FIG. 2] FIG. 2 is a schematic plan view of a light extraction layer according to the embodiment;
[FIG. 3] FIG. 3 is a cross-sectional view taken along the line III-III of FIG. 2;
[FIG. 4] FIG. 4 is a schematic cross-sectional view of a light extraction part according to the embodiment;
[FIG. 5] FIG. 5 is a schematic cross-sectional view of a laminated film according to a first modification;
[FIG. 6] FIG. 6 is a schematic cross-sectional view of a laminated film according to a second modification;
[FIG. 7] FIG. 7 is a schematic cross-sectional view of a laminated film according to a third modification;
[FIG. 8] FIG. 8 is a schematic cross-sectional view of a laminated film according to a fourth modification;
[FIG. 9] FIG. 9 is a schematic cross-sectional view of a laminated film according to a fifth modification;
[FIG. 10] FIG. 10 is a schematic cross-sectional view of a laminated film according to a sixth modification;
[FIG. 11] FIG. 11 is a schematic cross-sectional view of a laminated film according to a seventh modification;
[FIG. 12] FIG. 12 is a schematic cross-sectional view of a laminated film according to an eighth modification; and
[FIG. 13] FIG. 13 is a schematic cross-sectional view of a laminated film according to a ninth modification.

### MODE FOR CARRYING OUT THE INVENTION

An embodiment of the present invention will be described with reference to the drawings. In the drawings, the same components are denoted by the same reference numerals and duplicate descriptions will be omitted as appropriate.

The following embodiment exemplifies a laminated film to embody the technical ideas of the present invention, and the present invention is not limited to the following embodiment. Unless otherwise specified, the dimensions, materials, shapes, relative arrangements, and the like of components described below are not intended to limit the scope of the present invention thereto, but rather are described as examples. Further, the sizes, positional relationships, and the like of members illustrated in the drawings may be exaggerated for a better understanding of the structures.

In the drawings, a Cartesian coordinate system having an X-axis, a Y-axis, and a Z-axis is used to indicate directions. The X-axis, the Y-axis, and the Z-axis are orthogonal to one another. A direction in which the arrow of the X-axis points is referred to as a +X direction or a +X side, and a direction opposite to the +X direction is referred to as a -X direction or a -X side. A direction in which the arrow of the Y-axis points is referred to as a +Y direction or a +Y side, and a direction opposite to the +Y direction is referred to as a -Y direction or a -Y side. A direction in which the arrow of the Z-axis points is referred to as a +Z direction or a +Z side, and a direction opposite to the +Z direction is referred to as a -Z direction or a -Z side.

The Z direction along the Z-axis represents the lamination direction of layers constituting the laminated film according to the embodiment. In the present specification, the term "plan view" refers to viewing an object from the Z direction. The +Z direction is referred to as "above" and the -Z direction is referred to as "below". However, these directions do not limit the orientation of the laminated film according to the embodiment. Further, in the present specification, the term "thickness" refers to the length of an object in the Z direction, that is, in the lamination direction of the layers. A cross-sectional view illustrates a cross section parallel to the YZ plane of the laminated film according to the embodiment.

### [Embodiment]

### <Example of Overall Configuration of Laminated Film 10 According to Embodiment>

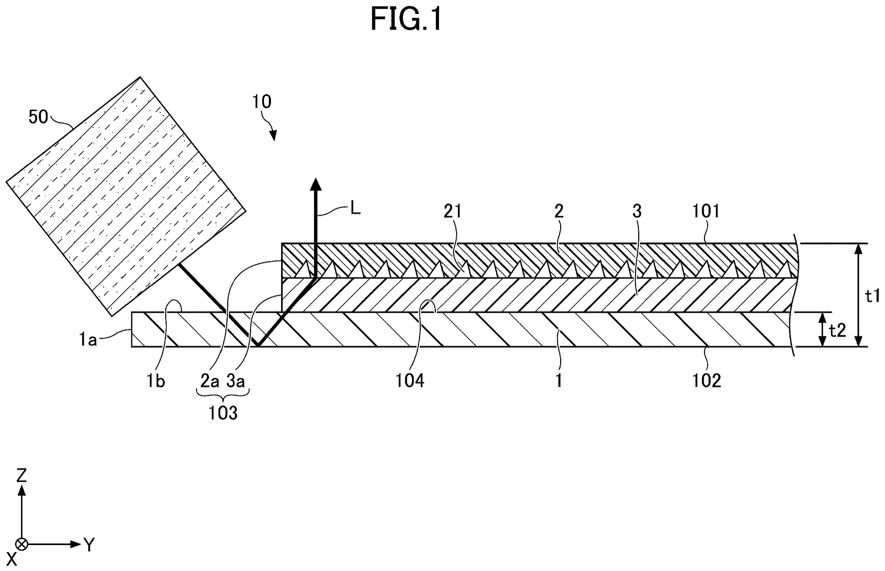

FIG. 1 is a cross-sectional view schematically illustrating an example of a laminated film 10 according to a first embodiment. In the example illustrated in FIG. 1, the laminated film 10 is a laminated film in which a plurality of layers are laminated. The laminated film 10 includes an end surface 103 along the lamination direction (Z direction), a light incident surface 1b intersecting the end surface 103 and allowing light L from a light source 50 to enter, a light guide layer 1 configured to guide the light L entering through the light incident surface 1b, and a light extraction layer 2 including a light extraction part 21 configured to extract the light L guided by the light guide layer 1.

The light source 50 is, for example, a light emitting diode (LED) light source. The light L from the light source 50 enters the light guide layer 1 through the light incident surface 1b located in a region of the light guide layer 1 that does not overlap the light extraction layer 2 in a plan view. In the example illustrated in FIG. 1, the region of the light incident surface 1b is a region of an upper surface 104 of the light guide layer 1 defined by an end portion 1a of the light guide layer 1 and an end portion 2a of the light extraction layer 2.

The inclination angle of the light source 50 disposed over the light incident surface 1b with respect to the light guide layer 1 may be any angle as long as the light L from the light source 50 can enter the light guide layer 1 through the light incident surface 1b and can be guided in the light guide layer 1. The light source 50 is fixed to a structure around the laminated film 10, such as an adherend on which the laminated film 10 is disposed, with an adhesive member or the like.

The laminated film 10 causes the light guide layer 1 to guide the light L from the light source 50, and causes the light extraction part 21 to extract the light L from the inside of the light guide layer 1 to the outside. The laminated film 10 can illuminate a space in which the laminated film 10 is disposed with the light L extracted from the light guide layer 1. The laminated film 10 can be disposed on an adherend such as glass, a window, a wall, a floor, or a ceiling. Further, the laminated film 10 can be used as a flexible lighting film without being disposed on an adherend. For example, the laminated film 10 is disposed by being attached to the surface of an adherend. The laminated film 10 can illuminate an indoor space or the like in a state of being disposed on an adherend such as window glass.

In the present embodiment, a thickness t1 between a first surface 101 and a second surface 102 is 1,000 µm or less. The first surface 101 is a surface of the light extraction layer 2 on the side opposite to the side on which the light guide layer 1 is disposed. The second surface 102 is a surface of the light guide layer 1 on the side opposite to the side on which the light extraction layer 2 is disposed. For example, the thickness t1 between the first surface 101 and the second surface 102 can be 800 µm or less, 700 µm or less, 600 µm or less, 500 µm or less, 400 µm or less, or 300 µm or less. The lower limit of the thickness t1 is not particularly limited, and can be, for example, 50 µm or more, 100 µm or more, or 200 µm or more. When the thickness t1 is 1,000 µm or less, the visibility of the laminated film 10 itself can be reduced, and the laminated film 10 can be made less noticeable. Further, the laminated film 10 can be used as a flexible film that emits light. In the present embodiment, the laminated film 10 having high designability can be provided by reducing the visibility of the laminated film 10. Further, the laminated film 10 can improve the designability of an adherend on which the laminated film 10 is disposed.

For example, if light from a light source is caused to enter a light guide layer from an end portion of a laminated film, the incidence efficiency of the light into the laminated film would decrease because the area of the end portion of the light guide layer is small. As the thickness of the laminated film decreases, the area of the end portion of the laminated film becomes smaller, thereby making it difficult for light to enter the inside of the laminated film from the end portion of the laminated film. As a result, the incidence efficiency would decrease. For example, if the thickness of the laminated film is 1,000 µm or less in order to improve the designability of the laminated film, the incidence efficiency of light from the light source would decrease because the laminated film is thin.

In the laminated film 10, the end portion 2a of the light extraction layer 2 can be located inward of the end portion 1a of the light guide layer 1 in a plan view. For example, the distance between the end portion 2a of the light extraction layer 2 and the end portion 1a of the light guide layer 1 is 1 mm or more and 100 mm or less. The phrase "inward in a plan view" means a side closer to the center of the laminated film 10 when the laminated film 10 is viewed in a plan view. In the laminated film 10, the light L from the light source 50 enters the light guide layer 1 through the light incident surface 1b located in the region of the light guide layer 1 that does not overlap the light extraction layer 2. For example, by making the area of the light incident surface 1b larger than the area of the end portion 2a of the light guide layer 1, the incidence efficiency of the light L into the laminated film 10 through the light incident surface 1b can be increased, as compared to when the light L enters through the end portion 2a of the light guide layer 1. As described above, according to the present embodiment, even when the thickness of the laminated film 10 is reduced, the laminated film 10 having high incidence efficiency of the light L from the light source 50 can be provided.

In the laminated film 10, a thickness t2 of the light guide layer 1 may be 30 µm or more. By setting the thickness t2 of the light guide layer 1 to 30 µm or more, it is possible to increase the incidence efficiency of the light L from the light source 50 into the laminated film 10.

Further, in the laminated film 10, the light extraction layer 2 may be disposed on the side of the light guide layer 1 on which the light source 50 is located. With this configuration, the thickness of a structure including the laminated film 10 and the light source 50 is the sum of the thickness of the light guide layer 1 and the thickness of the light source 50. Conversely, if the light extraction layer is disposed on the side of the light guide layer opposite to the side on which the light source is located, the thickness of a structure including the laminated film and the light source would be the sum of the thickness of the light guide layer, the thickness of the light extraction layer, and the thickness of the light source. Therefore, by disposing the light extraction layer 2 on the side of the light guide layer 1 on which the light source 50 is located, the thickness of the structure including the laminated film 10 and the light source 50 can be reduced as compared to when the light extraction layer 2 is disposed on the side of the light guide layer 1 opposite to the side on which the light source 50 is located.

The laminated film 10 can be composed of a resin. Because the laminated film 10 composed of a resin is highly flexible, the laminated film 10 can be handled in various forms. For example, in a case where the laminated film 10 is formed in an elongated shape, the elongated laminated film 10 can be wound up, and thus the laminated film 10 can be easily handled. However, the laminated film 10 is not necessarily composed of a resin, and at least a portion of the laminated film 10 may be composed of glass or the like.

The laminated film 10 can include an adhesive layer 3 disposed between the light guide layer 1 and the light extraction layer 2 and configured to bond the light guide layer 1 and the light extraction layer 2. In the example illustrated in FIG. 1, the end surface 103 is a surface including the end portion 2a of the light extraction layer 2 and an end portion 3a of the adhesive layer 3. However, the adhesive layer 3 is not an essential component, and the light guide layer 1 and the light extraction layer 2 may be bonded together without the adhesive layer 3 interposed therebetween.

### <Example Configuration of Light Guide Layer 1>

The light guide layer 1 can be formed of a film having flat surfaces on both sides. A material used for the light guide layer 1 is preferably one having a low light absorption coefficient. For example, as the material used for the light guide layer 1, an acrylic-based film such as polymethyl methacrylate (PMMA), a cycloolefin-based film such as a cycloolefin polymer (COP), a polyethylene-based film such as polyethylene terephthalate (PET), or a polycarbonate-based film may be used.

From the viewpoint of the incidence efficiency of light from the light source 50 into the laminated film 10, the thickness of the light guide layer 1 is preferably 30 µm or more, more preferably 40 µm or more, and even more preferably 60 µm or more or 100 µm or more. Conversely, from the viewpoint of imparting flexibility, the thickness of the light guide layer 1 is preferably 800 µm or less, more preferably 600 µm or less, even more preferably 500 µm or less or less than 500 µm, and particularly preferably 400 µm or less, 300 µm or less, or 200 µm or less. The refractive index of the light guide layer 1 is preferably 1.45 or more and 1.60 or less, for example.

### <Example Configuration of Light Extraction Layer 2>

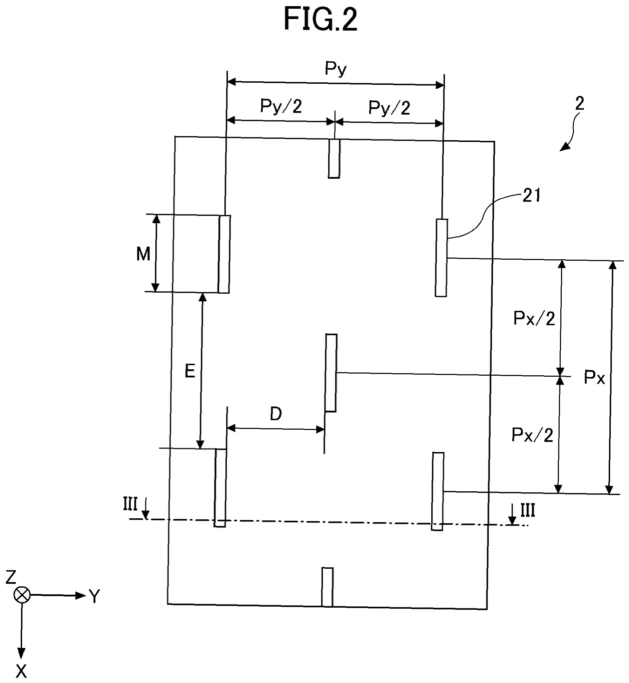

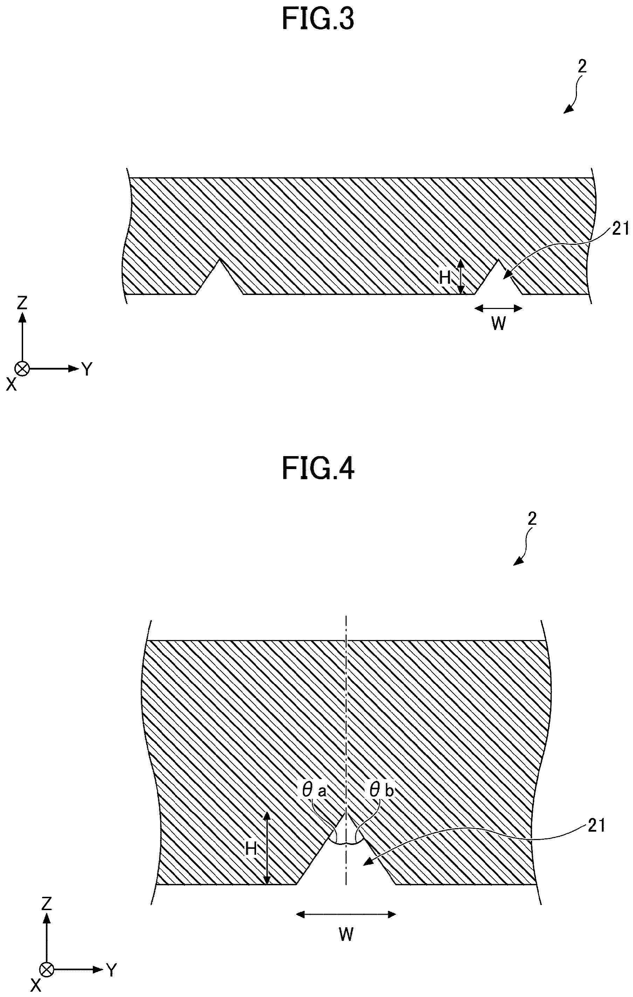

An example of a configuration of the light extraction layer 2 will be described with reference to FIGS. 2 to 4 in addition to FIG. 1. FIG. 2 is a plan view schematically illustrating the light extraction layer 2. FIG. 3 is a cross-sectional view schematically illustrating the light extraction layer 2. FIG. 4 is a cross-sectional view schematically illustrating the light extraction part 21.

The light extraction part 21 included in the light extraction layer 2 may be a plurality of internal spaces provided in the light extraction layer 2. Each of the plurality of internal spaces forms an interface that directs light toward the +Z side by total internal reflection. The internal spaces may also be referred to as cavities. The shape of each of the internal spaces in a cross-sectional view is a triangular shape (perpendicular to the X direction and parallel to the YZ plane) having an apex on the +Z side, and each of the internal spaces causes the light L propagating in the light guide layer 1 in the +Y direction to be directed toward the +Z side. The light L directed toward the +Z side by the internal spaces is emitted from the laminated film 10. The shape of each of the internal spaces in a cross-sectional view is not limited to a triangular shape, and may be, for example, a trapezoidal shape or the like as long as each of the internal spaces has an interface that causes the light L propagating in the +Y direction to be directed toward the +Z side. The light emission direction can be changed by changing the shape (for example, the direction of the apex of the triangle) of each of the internal spaces in a cross-sectional view .

Because the laminated film 10 can cause the light extraction part 21 to extract the light L guided by the light guide element 1 and can control the light distribution of the extracted light L, the laminated film 10 can have a visible light transmittance of 60% or more and a haze value of less than 10%. Further, by adjusting the shape, arrangement, and the like of the plurality of internal spaces serving as the light extraction part 21, the light distribution, the emission efficiency, and the luminance distribution of the light L to be emitted from the laminated film 10 can be controlled. The light extraction part 21 is typically an air cavity filled with air. However, instead of air, the air cavity may be filled with a material having a refractive index lower than the refractive index of the light extraction layer 2.

In the light extraction layer 2, the plurality of internal spaces, serving as the light extraction part 21, are arranged regularly or randomly along a main surface, that is, a flat surface substantially parallel to the XY plane. The size of each of the internal spaces can be appropriately selected within a range that allows the internal spaces to be included in the light extraction layer 2. As the light extraction layer 2 including the light extraction part 21 therein, for example, any of light guide layers disclosed in International Publication No. WO 2019/182091, International Publication No. WO 2011/124765, International Publication No. WO 2019/087118, and International Publication No. WO 2011/127187 can be used. All disclosures of these publications are incorporated herein by reference.

For example, the light extraction layer 2 is produced by laminating a first film having no pattern formed thereon and a second film having a desired fine pattern formed thereon, or by bonding the first film and the second film together with an adhesive (including a pressure-sensitive adhesive).

Laser patterning, direct laser imaging, laser drilling, mask-based or maskless laser irradiation, or electron beam irradiation can be used to form the fine pattern on the second film. Further, a material or a refractive index value may be changed by imparting individual characteristics by printing, inkjet printing, screen printing, or the like. Micro-dispensing, nano-dispensing, dosing, direct writing, discrete laser sintering, micro-electrical discharge machining (EDM), micro-machining, micro-molding, imprinting, embossing, or a similar method can also be used.

From the viewpoint of obtaining a good visible light transmittance and a good haze value of the laminated film 10, the ratio of the total area of the plurality of internal spaces serving as the light extraction part 21 to the area of the light extraction layer 2 (occupied area ratio) is preferably 30% or less in a plan view. Note that the occupied area ratio of the internal spaces may be uniform, or may increase as the distance from the light source 50 increases so that the luminance does not decrease as the distance from the light source increases. The occupied area ratio of the internal spaces is preferably uniform. From the viewpoint of obtaining a good luminance, the occupied area ratio of the internal spaces is preferably 1% or more. The occupied area ratio of the internal spaces is preferably 1% or more and 30% or less, and the upper limit value of the occupied area ratio of the internal spaces is more preferably 25% or less. In order to obtain a high visible light transmittance, the occupied area ratio of the internal spaces is preferably 10% or less and more preferably 5% or less.

The above-described features of the light extraction part 21 are not limited to the plurality of internal spaces formed in the light extraction layer 2 exemplified herein, but are common to various light distribution control structures. As a light distribution control structure formed by a plurality of internal spaces, for example, a light distribution structure described in International Publication No. WO 2019/087118 can be used.

The light extraction part 21 is not limited to the plurality of internal spaces, and may be a plurality of prisms arranged in the light extraction layer 2. The light extraction layer 2 may be a prism sheet including a plurality of prisms therein. Alternatively, a plurality of projections (prism portions) may be directly formed on the surface of the light extraction layer 2. The refractive index of the light extraction layer 2 is preferably substantially equal to the refractive index of the adhesive layer 3, and the difference (in absolute value) between the refractive index of the light extraction layer 2 and the refractive index of the adhesive layer 3 is preferably 0.15 or less and more preferably 0.1 or less.

A light distribution control structure in which the light extraction part 21 is the plurality of internal spaces has higher light utilization efficiency than a light distribution control structure such as a prism sheet. Further, the light distribution can be controlled by adjusting the cross-sectional shape (for example, angles θa and θb of inclined surfaces in FIG. 4), the size, the arrangement density, the distribution, and the like of the internal spaces. In addition, the visible light transmittance and the haze value of the laminated film 10 can be controlled by adjusting the cross-sectional shape, the size, the arrangement density, and the distribution of the plurality of internal spaces serving as the light extraction part 21. The visible light transmittance of the laminated film 10 is 60% or more, and is preferably 65% or more, 70% or more, 75% or more, or 80% or more. The haze value of the laminated film 10 is less than 10%, and can be preferably less than 9%, less than 8%, less than 7%, less than 6%, less than 5%, less than 4%, or less than 3%. The haze value can be measured using a haze meter.

The size and the density of the internal spaces affect the haze value. The size (a length M and a width W, see FIGS. 2 to 4) of each of the internal spaces is preferably such that the length M is 10 µm or more and 500 µm or less, and the width W is 1 µm or more and 100 µm or less, for example. From the viewpoint of the light extraction efficiency of the light extraction layer 2, a height H is preferably 1 µm or more and 100 µm or less. The plurality of internal spaces are preferably uniformly distributed in a discrete manner, and are preferably arranged periodically as illustrated in FIG. 2, for example. A pitch Px is preferably, for example, 10 µm or more and 500 µm or less. A pitch Py is preferably, for example, 10 µm or more and 500 µm or less. An interval E in FIG. 2 is an interval between adjacent internal spaces of the plurality of internal spaces in the X direction. An interval D in FIG. 2 is an interval between adjacent internal spaces of the plurality of internal spaces in the Y direction.

### <Example Configuration of Adhesive Layer 3>

At least one of a pressure-sensitive adhesive or an adhesive, such as an acrylic-based or a polyester-based pressure-sensitive adhesive or adhesive, can be appropriately selected for the adhesive layer 3. The refractive index of the adhesive layer 3 is preferably substantially the same as that of the light guide layer 1, and is preferably 1.45 or more and 1.60 or less, for example.

The adhesive layer 3 is disposed between the light guide layer 1 and the light extraction layer 2. The ratio of the thickness of the adhesive layer 3 to the thickness t1 of the laminated film 10 can be 10% or more, preferably 15% or more, and more preferably 20% or more. The upper limit of the ratio is not particularly limited, and is, for example, 50% or less or 40% or less. By disposing the adhesive layer 3 between the light guide layer 1 and the light extraction layer 2, the laminated film 10 can have appropriate flexibility.

### [Modifications]

Various modifications will be described below. Note that the same names and reference numerals as those used in the above-described embodiment denote the same or similar members or components, and detailed descriptions thereof will be omitted as appropriate.

### <First Modification>

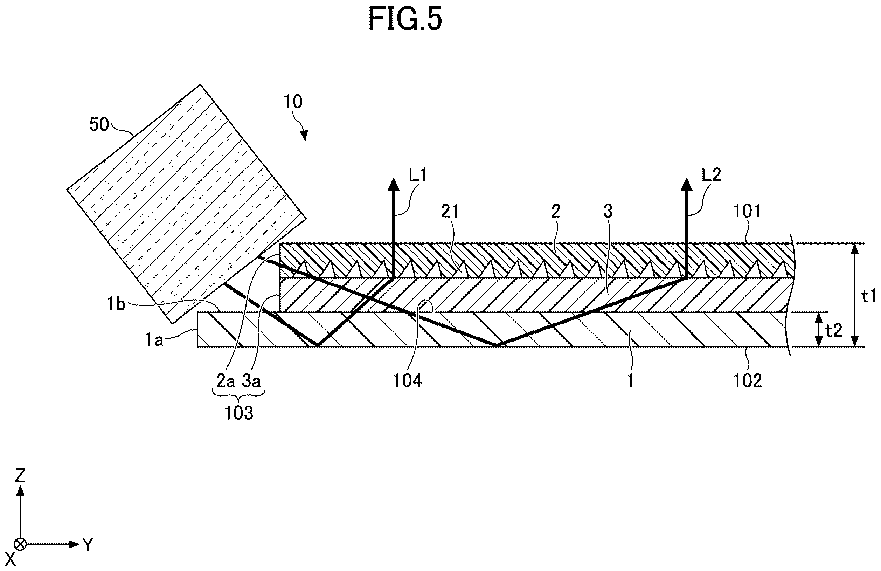

FIG. 5 is a schematic cross-sectional view of a laminated film 10 according to a first modification. The laminated film 10 according to the first modification differs from that according to the above-described embodiment in that light from the light source 50 can further enter the laminated film 10 through an end portion 2a of a light extraction layer 2. In the first modification, light can enter not only through a light incident surface 1b but also through the end portion 2a of the light extraction layer 2, thereby increasing the incidence efficiency of light from the light source 50 into the laminated film 10.

As illustrated in FIG. 5, the light source 50 is disposed over the light incident surface 1b. Light from the light source 50 can enter the laminated film 10 through the light incident surface 1b and can also enter the laminated film 10 through the end portion 2a of the light extraction layer 2. The light source 50 is fixed to either a light guide layer 1 or the light extraction layer 2, with an adhesive member or the like. The end portion 2a of the light extraction layer 2 is an end portion located closest to the light source 50 among a plurality of end portions of the light extraction layer 2. In the example illustrated in FIG. 5, light L1 from the light source 50 corresponds to light entering the laminated film 10 through the light incident surface 1b. Light L2 from the light source 50 corresponds to light entering the laminated film 10 through the end portion 2a of the light extraction layer 2.

The light extraction layer 2 may be disposed in contact with the light source 50. By disposing the light extraction layer 2 in contact with the light source 50, light loss due to leakage of light from the light source 50 without entering the light extraction layer 2 can be reduced, and thus the incidence efficiency of light from the light source 50 to the light extraction layer 2 can be increased.

### <Second Modification>

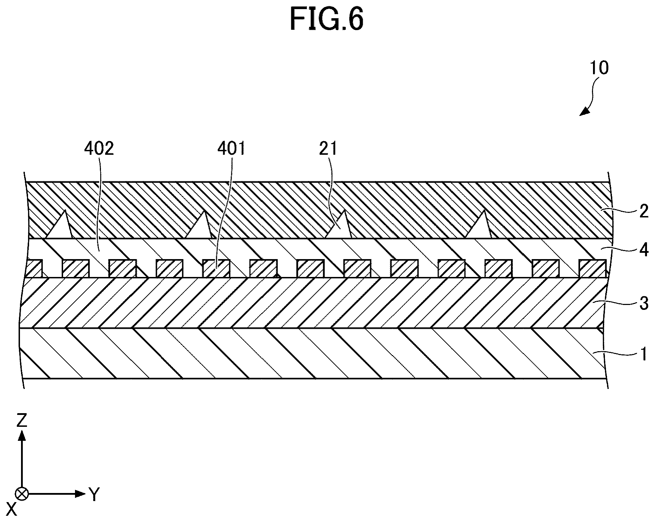

FIG. 6 is a schematic cross-sectional view of a laminated film 10 according to a second modification. The laminated film 10 according to the second modification differs from that according to the above-described embodiment in that the laminated film 10 according to the second modification includes a pattern layer 4 disposed between a light guide layer 1 and a light extraction layer 2 and including a first portion 401 and a second portion 402. The refractive index of the first portion 401 is lower than that of the light guide layer 1, and the refractive index of the second portion 402 is higher than that of the first portion 401. When the laminated film 10 according to the second modification includes the pattern layer 4, the luminance uniformity of illumination light of the laminated film 10 according to the second modification can be improved. The pattern layer 4 may be configured such that the area of the second portion 402 increases as the distance from the light incident surface increases.

As the pattern layer 4, a light coupling layer disclosed in International Publication No. WO 2022/025067 can be used. The entire disclosure of International Publication No. WO 2022/025067 is incorporated herein by reference. The first portion 401 may be a low refractive index layer or an air cavity. The second portion 402 may be composed of a material having a refractive index substantially equal to that of the light guide layer 1 or that of an adhesive layer 3. When the low refractive index layer is used, the refractive index of the low refractive index layer is preferably 1.25 or less, more preferably 1.20 or less, and even more preferably 1.15 or less. The low refractive index layer is preferably solid, and the refractive index is preferably 1.05 or more, for example. The difference between the refractive index of the light guide layer 1 and the refractive index of the low refractive index layer is preferably 0.20 or more, more preferably 0.23 or more, and even more preferably 0.25 or more. The low refractive index layer having a refractive index of 1.25 or less can be formed by using, for example, a porous material.

### <Third Modification>

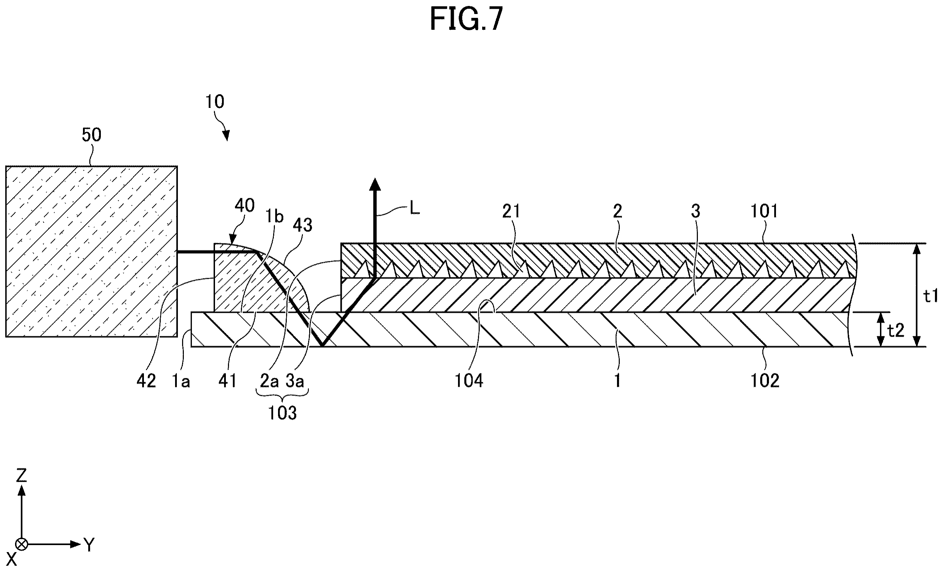

FIG. 7 is a schematic cross-sectional view of a laminated film 10 according to a third modification. The laminated film 10 according to the third modification differs from that according to the above-described embodiment in that, in a plan view, the laminated film 10 according to the third modification includes a tapered member 40 serving as a light incident member disposed on a light incident surface 1b and allowing light from the light source 50 to enter a light guide layer. By including the tapered member 40, the laminated film 10 can increase the incidence efficiency of light L from the light source 50.

As illustrated in FIG. 7, the tapered member 40 has a bottom surface 41 for being laminated on an upper surface 104 of a light guide layer 1 or the like, a light incident surface 42 that allows light L from the light source 50 to enter the tapered member 40, and an inclined surface 43 that reflects the light L entering the tapered member 40 from the light source 50 so as to guide the light L toward the light guide layer 1. The inclined surface 43 can control the direction of the light incident on the inclined surface 43 at an angle that is less than the critical angle. The inclined surface 43 may be either a flat surface or a curved surface. The curved surface of the inclined surface 43 may be a portion of a spherical surface or an aspherical surface. Examples of the aspherical surface include a parabolic surface. In the example illustrated in FIG. 7, the tapered member 40 has a tapered shape in which the thickness decreases with increasing distance from the light source 50.

The tapered member 40 can be composed of a resin or a glass material having a transmittance with respect to the light L from the light source 50. An acrylic resin or the like can be used as the resin material. The transmittance is preferably 60% or more.

The tapered member 40 is disposed on the light incident surface 1b. The tapered member 40 may be bonded to the light incident surface 1b with an adhesive member or the like. From the viewpoint of improving the incidence efficiency of the light L into the laminated film 10, it is preferable that the distance between the light extraction layer 2 and the tapered member 40 is small, and it is more preferable that the light extraction layer 2 and the tapered member 40 are in contact with each other.

In a case where a plurality of light sources 50 are arranged side by side, the laminated film 10 may include a plurality of tapered members 40. Alternatively, the laminated film 10 may include one tapered member 40 having a length, in a direction in which the plurality of light sources 50 are arranged side by side, that allows light from each of the plurality of light sources 50 to enter the tapered member 40.

As the tapered member 40, an "optical incoupling element" disclosed in International Publication No. WO 2022/030544 can be used. The entire disclosure of International Publication No. WO 2022/030544 is incorporated herein by reference.

The tapered member 40 may be any member that can control the direction of reflection of the light L entering the tapered member 40 at an angle that is less than the critical angle, and may be, for example, a diffraction grating or a directional layer including an optical cavity. For example, the directional layer can be formed by bonding a film on which an air cavity pattern is formed to another film. As the directional layer, for example, an "optical incoupling tape" disclosed in International Publication No. WO 2022/030543 can be used. The entire disclosure of International Publication No. WO 2022/030543 is incorporated herein by reference.

### <Fourth Modification>

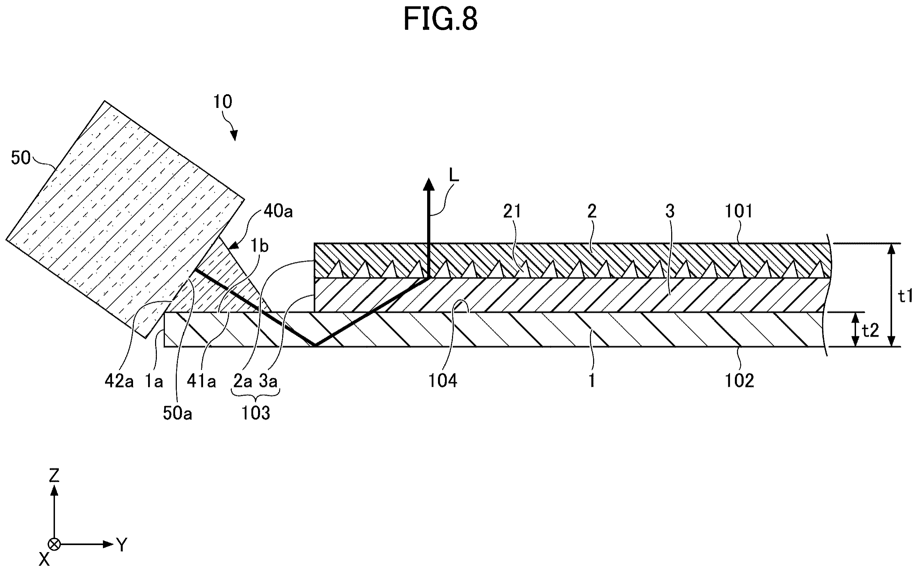

FIG. 8 is a schematic cross-sectional view of a laminated film 10 according to a fourth modification. The laminated film 10 according to the fourth modification differs from that according to the above-described embodiment in that, in a plan view, the laminated film 10 according to the fourth modification includes a prism member 40a serving as a light incident member disposed on a light incident surface 1b and allowing light from the light source 50 to enter a light guide layer. By including the prism member 40a, the laminated film 10 can increase the incidence efficiency of light L from the light source 50.

As illustrated in FIG. 8, the prism member 40a has a bottom surface 41a for being laminated on an upper surface 104 of a light guide layer 1 or the like, and a light incident surface 42a allowing the light L from the light source 50 to enter. The light source 50 and the prism member 40a may be integrally formed by disposing the light source 50 and the prism member 40a such that a light exit surface 50a of the light source 50 and the light incident surface 42a of the prism member 40a are in contact with each other. When the light source 50 and the prism member 40a are integrally formed, reflection at the interface between the light source 50 and the prism member 40a can be reduced, and thus light loss can be reduced. As a result, the light incidence efficiency can be improved.

The prism member 40a can be composed of a resin or a glass material having a transmittance with respect to the light L from the light source 50. An acrylic resin or the like can be used as the resin material. The transmittance is preferably 60% or more.

The prism member 40a is disposed on the light incident surface 1b. The prism member 40a may be bonded to the light incident surface 1b with an adhesive member or the like. From the viewpoint of improving the incidence efficiency of the light L into the laminated film 10, it is preferable that the distance between the light extraction layer 2 and the prism member 40a is small, and it is more preferable that the light extraction layer 2 and the prism member 40a are in contact with each other.

In a case where a plurality of light sources 50 are arranged side by side, the laminated film 10 may include a plurality of prism members 40a. Alternatively, the laminated film 10 may include one prism member 40a having a length, in a direction in which the plurality of light sources 50 are arranged side by side, that allows light from each of the plurality of light sources 50 to enter the prism member 40a.

### <Fifth Modification>

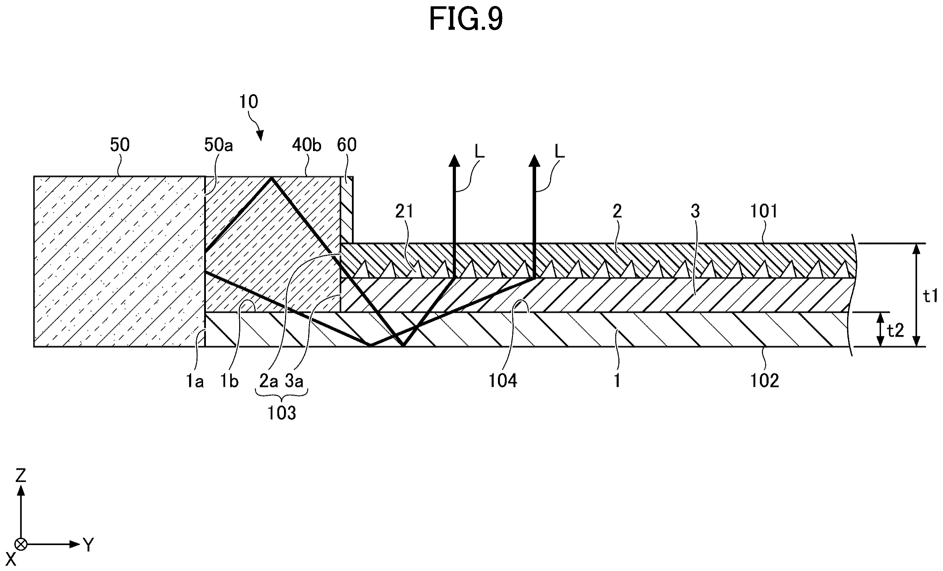

FIG. 9 is a schematic cross-sectional view of a laminated film 10 according to a fifth modification. The laminated film 10 according to the fifth modification differs from that according to the above-described embodiment in that, in a plan view, the laminated film 10 according to the fifth modification includes a first light transmissive member 40b serving as a light incident member disposed on a light incident surface 1b and allowing light from the light source 50 to enter a light guide layer. By including the first light transmissive member 40b, the laminated film 10 can improve the incidence efficiency of light L from the light source 50.

The first light transmissive member 40b is a rectangular parallelepiped member. The first light transmissive member 40b can be disposed on the light incident surface 1b and between an end portion 2a of a light extraction layer 2 and the light exit surface 50a of the light source 50. After the light L from the light source 50 enters the inside of the first light transmissive member 40b, a portion of the light L is totally reflected by the upper surface of the first light transmissive member 40b and enters the inside of the laminated film 10 through the end portion 2a of the light extraction layer 2, an end portion 3a of an adhesive layer 3, or the light incident surface 1b. Another portion of the light L entering the inside of the first light transmissive member 40b enters the inside of the laminated film 10 through the end portion 2a, the end portion 3a, or the light incident surface 1b without being totally reflected by the upper surface of the first light transmissive member 40b.

From the viewpoint of reducing interface reflection and reducing loss of incident light into the laminated film 10 due to the interface reflection, the first light transmissive member 40b is preferably disposed in contact with the end portion 2a and also in contact with the light exit surface 50a. The first light transmissive member 40b may be bonded to the light incident surface 1b with an adhesive member or the like.

Further, there may be a case where the position of the end portion 2a and the position of the end portion 3a are offset from each other in the Y direction. In such a case, if the first light transmissive member 40b is disposed in contact with one of the end portion 2a and the end portion 3a, a gap would be formed between the first light transmissive member 40b and the other of the end portion 2a and the end portion 3a. As a result, the light L from the light source 50 would be reflected at the interface in the gap, thereby causing loss of incident light into the laminated film 10. Therefore, it is preferable that the first light transmissive member 40b is disposed while being pressed against at least one of the end portion 2a or the end portion 3a. By disposing the first light transmissive member 40b while being pressed against at least one of the end portions, a gap between the first light transmissive member 40b and each of the end portion 2a and the end portion 3a can be reduced, and the incidence efficiency of the light L from the light source 50 into the laminated film 10 can be improved.

The first light transmissive member 40b can be composed of a resin or a glass material having a transmittance with respect to the light L from the light source 50. An acrylic resin or the like can be used as the resin material. The transmittance is preferably 60% or more.

In a case where a plurality of light sources 50 are arranged side by side, the laminated film 10 may include a plurality of first light transmissive members 40b. Alternatively, the laminated film 10 may include one first light transmissive member 40b having a length, in a direction in which the plurality of light sources 50 are arranged side by side, that allows light from each of the plurality of light sources 50 to enter the first light transmissive member 40b.

As illustrated in FIG. 9, the laminated film 10 may further include a reflective part 60 disposed on the side of the first light transmissive member 40b opposite to the side on which the light source 50 is located. For example, the reflective part 60 may be a reflective sheet disposed on the surface of the first light transmissive member 40b opposite to the side on which the light source 50 is located. The reflective sheet is a sheet-like member including a reflective surface, and is fixed by being bonded to the surface of the first light transmissive member 40b opposite to the side on which the light source 50 is located.

The reflective part 60 is not limited to the reflective sheet. For example, the reflective part 60 may be a reflective plate in which a reflective film is formed on a plate-like member. The reflective film can be composed of a metal material such as aluminum. Further, the reflective part 60 may be formed by applying a metal material by spraying or the like onto the surface of the first light transmissive member 40b opposite to the side on which the light source 50 is located.

The laminated film 10 causes the reflective part 60 to reflect the light L entering the first light transmissive member 40b from the light source 50. Thus, the possibility that the light L is transmitted through the surface of the first light transmissive member 40b opposite to the side on which the light source 50 is located and is emitted to the outside of the first light transmissive member 40b can be reduced. Accordingly, light loss can be reduced and the incidence efficiency of the light L from the light source 50 into the laminated film 10 can be improved. In addition, by using the reflective sheet as the reflective part 60, the reflective part 60 can be easily disposed on the first light transmissive member 40b.

### <Sixth Modification>

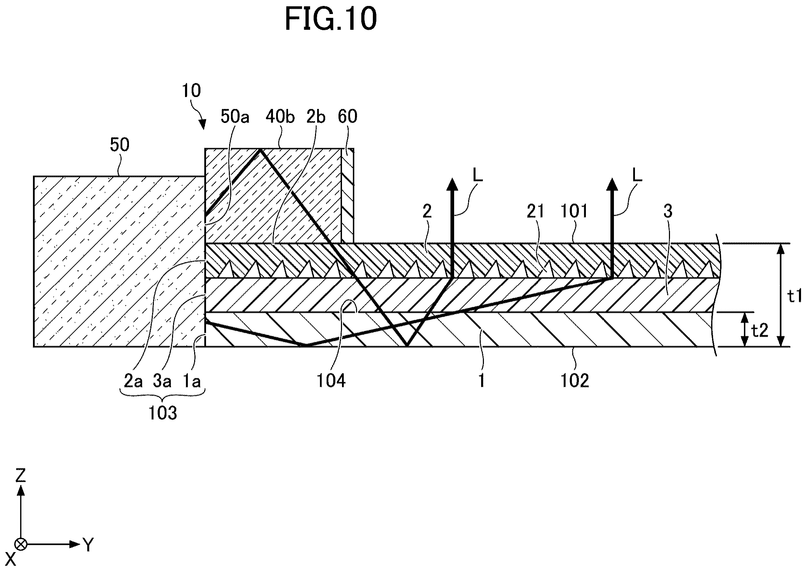

FIG. 10 is a schematic cross-sectional view of a laminated film 10 according to a sixth modification. The laminated film 10 according to the sixth modification differs from that according to the above-described embodiment in that the laminated film 10 according to the sixth modification has a light incident surface 2b that is at least a portion of a first surface 101, which is the surface of a light extraction layer 2 opposite to the side on which a light guide layer 1 is disposed. By using at least a portion of the first surface 101 as the light incident surface 2b, it is possible to improve the incidence efficiency of light L from the light source 50 into the laminated film 10.

In the example illustrated in FIG. 10, the laminated film 10 includes a first light transmissive member 40b. The first light transmissive member 40b is disposed on the light incident surface 2b. A region of the light incident surface 2b corresponds to a region of the first surface 101 facing the first light transmissive member 40b. The first light transmissive member 40b may be bonded to the light incident surface 2b with an adhesive member or the like.

The light source 50 is disposed such that the light exit surface 50a faces the first light transmissive member 40b and faces an end surface 103. In the example illustrated in FIG. 10, the end surface 103 is a surface including an end portion 1a of the light guide layer 1, an end portion 2a of the light extraction layer 2, and an end portion 3a of an adhesive layer 3.

A portion of the light L from the light source 50 enters the inside of the first light transmissive member 40b, and another portion enters the laminated film 10 through the end surface 103. A portion of the light entering the inside of the first light transmissive member 40b is totally reflected by the upper surface of the first light transmissive member 40b, and then enters the inside of the laminated film 10 through a light incident surface 1b. Another portion of the light L entering the inside of the first light transmissive member 40b enters the inside of the laminated film 10 through the light incident surface 1b without being totally reflected by the upper surface of the first light transmissive member 40b.

From the viewpoint of reducing interface reflection and reducing loss of incident light into the laminated film 10 due to the interface reflection, the light exit surface 50a is preferably in contact with the first light transmissive member 40b and also in contact with the end surface 103.

Further, there may be a case where the position of the end portion 1a, the position of the end portion 2a, and the position of the end portion 3a are offset from each other in the Y direction. In such a case, if the light source 50 is disposed such that the light exit surface 50a is in contact with one of the end portion 1a, the end portion 2a, and the end portion 3a, a gap would be formed between the first light transmissive member 40b and another end portion. As a result, the light L from the light source 50 would be reflected at the interface in the gap, thereby causing loss of incident light into the laminated film 10. Therefore, it is preferable that the light source 50 is disposed while the light exit surface 50a is being pressed against at least one of the end portion 1a, the end portion 2a, or the end portion 3a. By disposing the light source 50 while the light exit surface 50a is being pressed against one of the end portions, a gap between the light exit surface 50a and each of the end portion 1a, the end portion 2a, and the end portion 3a can be reduced, and the incidence efficiency of the light L from the light source 50 into the laminated film 10 can be improved.

In a case where a plurality of light sources 50 are arranged side by side, the laminated film 10 may include a plurality of first light transmissive members 40b. Alternatively, the laminated film 10 may include one first light transmissive member 40b having a length, in a direction in which the plurality of light sources 50 are arranged side by side, that allows light from each of the plurality of light sources 50 to enter the first light transmissive member 40b.

As illustrated in FIG. 10, the laminated film 10 can further include a reflective part 60 disposed on the side of the first light transmissive member 40b opposite to the side on which the light source 50 is located. The reflective part 60 is substantially the same as that described with reference to FIG. 9, and thus a duplicate description thereof will be omitted.

### <Seventh Modification>

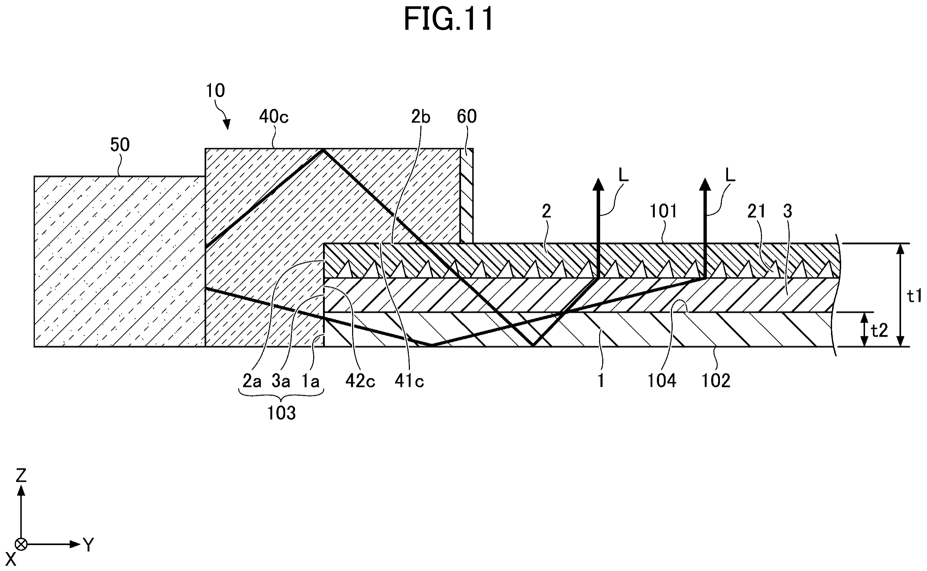

FIG. 11 is a schematic cross-sectional view of a laminated film 10 according to a seventh modification. The laminated film 10 according to the seventh modification differs from that according to the sixth modification in that a second light transmissive member 40c serving as a light incident member is disposed such that a portion of the second light transmissive member 40c faces a light incident surface 2b and another portion of the second light transmissive member 40c faces an end surface 103. A portion of the second light transmissive member 40c faces the light incident surface 2b and another portion of the second light transmissive member 40c faces the end surface 103. By including the second light transmissive member 40c, it is possible to improve the incidence efficiency of light L from the light source 50 into the laminated film 10.

In the example illustrated in FIG. 11, the second light transmissive member 40c has a first facing surface 41c and a second facing surface 42c. The first facing surface 41c is a surface facing the light incident surface 2b. The second facing surface 42c is a surface facing the end surface 103. In the example illustrated in FIG. 11, the end surface 103 is a surface including an end portion 1a of a light guide layer 1, an end portion 2a of a light extraction layer 2, and an end portion 3a of an adhesive layer 3. A region of the light incident surface 2b corresponds to a region of a first surface 101 facing the first facing surface 41c. The second light transmissive member 40c may be bonded to at least one of the light incident surface 2b or the end surface 103 with an adhesive member or the like.

The light source 50 is disposed such that the light exit surface 50a faces the second light transmissive member 40c. The light L from the light source 50 enters the inside of the second light transmissive member 40c. A portion of the light entering the inside of the second light transmissive member 40c is totally reflected by the upper surface of the second light transmissive member 40c and then enters the inside of the laminated film 10 through the light incident surface 2b or the end surface 103. Further, another portion of the light entering the inside of the second light transmissive member 40c enters the inside of the laminated film 10 through the light incident surface 2b or the end surface 103 without being totally reflected by the upper surface of the second light transmissive member 40c and then enters the inside of the laminated film 10.

From the viewpoint of reducing interface reflection and reducing loss of incident light into the laminated film 10 due to the interface reflection, the light exit surface 50a is preferably in contact with the second light transmissive member 40c, the first facing surface 41c is preferably in contact with the light incident surface 2b, and the second facing surface 42c is preferably in contact with the end surface 103.

Further, there may be a case where the position of the end portion 1a, the position of the end portion 2a, and the position of the end portion 3a are offset from each other in the Y direction. In such a case, if the second light transmissive member 40c is disposed to be in contact with one of the end portion 1a, the end portion 2a, and the end portion 3a, a gap would be formed between the second light transmissive member 40c and another end portion. As a result, the light L from the light source 50 would be reflected at the interface in the gap, thereby causing loss of incident light into the laminated film 10. Therefore, it is preferable that the second light transmissive member 40c is disposed while being pressed against at least one of the end portion 1a, the end portion 2a, or the end portion 3a. By disposing the second light transmissive member 40c while being pressed against one of the end portions, a gap between the second light transmissive member 40c and each of the end portion 1a, the end portion 2a, and the end portion 3a can be reduced, and the incidence efficiency of the light L from the light source 50 into the laminated film 10 can be improved.

In a case where a plurality of light sources 50 are arranged side by side, the laminated film 10 may include a plurality of second light transmissive members 40c. Alternatively, the laminated film 10 may include one second light transmissive member 40c having a length, in a direction in which the plurality of light sources 50 are arranged side by side, that allows light from each of the plurality of light sources 50 to enter the second light transmissive member 40c.

As illustrated in FIG. 11, the laminated film 10 can further include a reflective part 60 disposed on the side of the second light transmissive member 40c opposite to the side on which the light source 50 is located. The reflective part 60 is substantially the same as that described with reference to FIG. 9 except that the reflective part 60 is disposed on the second light transmissive member 40c, and thus a duplicate description thereof will be omitted.

### <Eighth Modification>

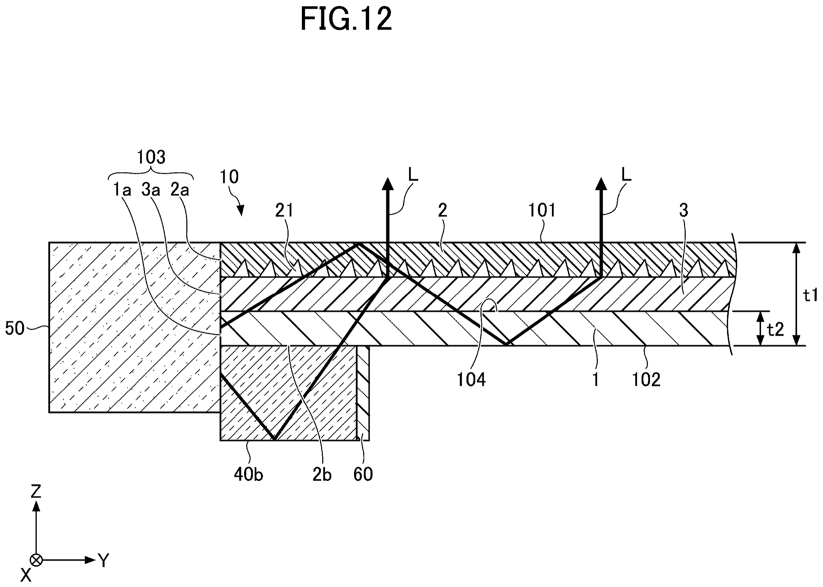

FIG. 12 is a schematic cross-sectional view of a laminated film 10 according to an eighth modification. The laminated film 10 according to the eighth modification differs from that according to the sixth modification in that a portion of a second surface 102, which is the surface of a light guide layer 1 opposite to the side on which a light extraction layer 2 is disposed, serves as a light incident surface 2b. Effects of the eighth modification are the same as those of the sixth modification.

### <Ninth Modification>

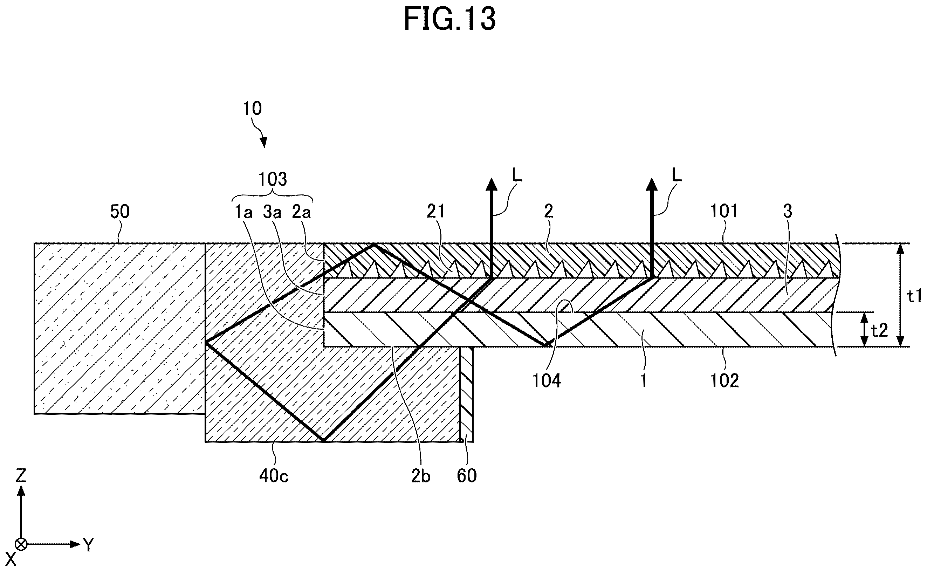

FIG. 13 is a schematic cross-sectional view of a laminated film 10 according to a ninth modification. The laminated film 10 according to the ninth modification differs from that according to the seventh modification in that a portion of a second surface 102, which is the surface of a light guide layer 1 opposite to the side on which a light extraction layer 2 is disposed, serves as a light incident surface 2b. Effects of the ninth modification are the same as those of the seventh modification.

### [Examples and Comparative Examples]

Examples and comparative examples will be described below. However, the present invention is not limited to these examples. In order to facilitate understanding of the following description, in Comparative Examples 1 to 3, components substantially the same as those of the laminated film 10 illustrated in FIG. 1 may be denoted by the same reference numerals illustrated in FIG. 1 for convenience.

### <Evaluation Method>

### (Evaluation of Emission Luminance)

Light from the light source 50 was caused to enter laminated films according to the examples and comparative examples, and the light was extracted from the light extraction layer side. The emission luminance of the extracted light was visually evaluated. Definitions of evaluation grades "A" to "D" for emission intensity are as follows.
A: Very good (luminance is very high)
B: Good (luminance is high)
C: Moderately good (luminance is moderately high)
D: Poor (luminance is low)

### (Evaluation of Flexibility)

The flexibility of the laminated films according to the examples and comparative examples was evaluated by sensory evaluation. Definitions of evaluation grades "A" to "D" for flexibility are as follows.
A: Very good (in the case of an elongated film, the film is flexible enough to be wound into a roll)
B: Good (inferior to A, but in the case of an elongated film, the film is flexible enough to be wound into a roll)
C: Moderately good (inferior to B, but in the case of an elongated film, the film is flexible enough to be wound into a roll)
D: Poor (in the case of an elongated film, it is difficult for the film to be wound into a roll)

### (Evaluation of Light Incident Stability)

The light incident stability of the laminated films according to the examples and comparative examples was evaluated by sensory evaluation. Definitions of evaluation grades "A" to "C" for light incident stability are as follows.
A: Easy and stable light incidence is possible
B: Stable light incidence is possible
C: Stable light incidence is difficult

### (Example 1)

Conditions for the laminated film according to Example 1 are indicated below.
- A light guide layer 1 was formed of an acrylic resin and had a thickness of 130 µm.
- An adhesive layer 3 was formed of a resin (CS9864) and had a thickness of 100 µm.
- A base film of a light extraction layer 2 was formed of an acrylic resin and had a thickness of 30 µm.
- A pressure-sensitive adhesive of the light extraction layer 2 was formed of a polyester resin and had a thickness of 7 µm.
- An uneven film of the light extraction layer 2 was formed of an acrylic resin and had a thickness of 128 µm.
- The total thickness of the laminated film 10 was 395 µm.
- The length of a light incident surface 1b from an end portion 1a of the light guide layer 1 to an end portion 2a of the light extraction layer 2 was 50 mm.
- Light from the light source 50 was caused to enter the inside of the laminated film through the light incident surface 1b and an end surface 103.

### (Example 2)

Conditions were the same as those of Example 1, except that a tapered member 40 was disposed on a light incident surface 1b (as in the third modification) and light from the light source 50 was caused to enter the laminated film through the tapered member 40 and then through each of the light incident surface 1b and an end surface 103.

### (Example 3)

Conditions were the same as those of Example 1, except that a tapered member 40 was disposed on a light incident surface 1b (as in the third modification) and light from the light source 50 was caused to enter the laminated film through the tapered member 40 and then through only the light incident surface 1b.

### (Example 4)

- The thickness of a light guide layer 1 was 170 µm.
- The thickness of a light extraction layer 2 was 725 µm.
- The total thickness of the laminated film was 995 µm.
- Conditions other than the above were the same as those of Example 1.

### (Example 5)

- The thickness of a light guide layer 1 was 170 µm.
- The thickness of a light extraction layer 2 was 725 µm.
- The total thickness of the laminated film was 995 µm.
- Conditions other than the above were the same as those of Example 2.

### (Example 6)

- The thickness of a light guide layer 1 was 170 µm.
- The thickness of a light extraction layer 2 was 725 µm.
- The total thickness of the laminated film was 995 µm.
- Conditions other than the above were the same as those of Example 3.

### (Example 7)

- The thickness of a light guide layer 1 was 30 µm.
- The total thickness of the laminated film was 295 µm.
- Conditions other than the above were the same as those of Example 1.

### (Example 8)

- The thickness of a light guide layer 1 was 30 µm.
- The total thickness of the laminated film was 295 µm.
- Conditions other than the above were the same as those of Example 2.

### (Example 9)

Conditions were the same as those of Example 1, except that a prism member 40a (as in the fourth modification) was used as a light incident member.

### (Example 10)

Conditions were the same as those of Example 1, except that a first light transmissive member 40b (as in the fifth modification) was used as a light incident member.

### (Example 11)

Conditions were the same as those of Example 1, except that a "non-overlapping region" was set to "absent" and a first light transmissive member 40b (as in the sixth modification) was used as a light incident member. As used herein, the "non-overlapping region" refers to a region of a light guide layer that does not overlap a light extraction layer in a plan view.

### (Example 12)

Conditions were the same as those of Example 1, except that the "non-overlapping region" was set to "absent" and a second light transmissive member 40c (as in the seventh modification) was used as a light incident member.

### (Comparative Example 1)

Conditions were the same as those of Example 1, except that light from the light source 50 was caused to enter the laminated film through an end surface 103.

### (Comparative Example 2)

Conditions were the same as those of Example 1, except that the "non-overlapping region" was set to "absent" and light from the light source 50 was caused to enter the laminated film through the end surface 103.

### (Comparative Example 3)

Conditions were the same as those of Example 1, except that the thickness of a light guide layer was 1,000 µm, the thickness of an adhesive layer was 50 µm, the thickness of a light extraction layer was 165 µm, and the total thickness of the laminated film was 1,215 µm, and light from the light source 50 was caused to enter the laminated film through an end surface 103.

Table 1 indicates a list of conditions and evaluation results for Examples 1 to 12 and Comparative Examples 1 to 3.

**[Table 1]**

| | THICKNESS OF LIGHT GUIDE LAYER (*µ*m) | THICKNESS OF ADHESIVE LAYER (*µ*m) | THICKNESS OF LIGHT EXTRACTION LAYER (*µ*m) | TOTAL THICKNESS (*µ*m) | PRESENCE OR ABSENCE OF NON-OVERLAPPING REGION | LIGHT INCIDENT MEMBER | LIGHT INCIDENT POSITION | EMISSION INTENSITY | FLEXIBILITY | LIGHT INCl-DENT STABILITY |
|---|---|---|---|---|---|---|---|---|---|---|
| EXAMPLE 1 | 130 | 100 | 165 | 395 | PRESENT | NONE | LIGHT INCIDENT SURFACE, END SURFACE | B | B | B |
| EXAMPLE 2 | 130 | 100 | 165 | 395 | PRESENT | TAPERED MEMBER | LIGHT INCIDENT SURFACE, END SURFACE | A | B | A |
| EXAMPLE 3 | 130 | 100 | 165 | 395 | PRESENT | TAPERED MEMBER | LIGHT INCIDENT SURFACE | B | B | A |
| EXAMPLE 4 | 170 | 100 | 725 | 995 | PRESENT | NONE | LIGHT INCIDENT SURFACE, END SURFACE | A | C | B |
| EXAMPLE 5 | 170 | 100 | 725 | 995 | PRESENT | TAPERED MEMBER | LIGHT INCIDENT SURFACE, END SURFACE | A | C | A |
| EXAMPLE 6 | 170 | 100 | 725 | 995 | PRESENT | TAPERED MEMBER | LIGHT INCIDENT SURFACE | B | C | A |
| EXAMPLE 7 | 30 | 100 | 165 | 295 | PRESENT | NONE | LIGHT INCIDENT SURFACE, END SURFACE | C | A | B |
| EXAMPLE 8 | 30 | 100 | 165 | 295 | PRESENT | TAPERED MEMBER | LIGHT INCIDENT SURFACE, END SURFACE | C | A | A |
| EXAMPLE 9 | 130 | 100 | 165 | 395 | PRESENT | PRISM MEMBER | LIGHT INCIDENT SURFACE, END SURFACE | B | B | A |
| EXAMPLE 10 | 130 | 100 | 165 | 395 | PRESENT | FIRST LIGHT TRANSMISSIVE MEMBER | LIGHT INCIDENT SURFACE, END SURFACE | A | B | A |
| EXAMPLE 11 | 130 | 100 | 165 | 395 | ABSENT | FIRST LIGHT TRANSMISSIVE MEMBER | LIGHT INCIDENT SURFACE, END SURFACE | A | B | A |
| EXAMPLE 12 | 130 | 100 | 165 | 395 | ABSENT | SECOND LIGHT TRANSMISSIVE MEMBER | LIGHT INCIDENT SURFACE, END SURFACE | A | B | A |
| COMPARATIVE EXAMPLE 1 | 130 | 100 | 165 | 395 | PRESENT | NONE | END SURFACE | B-D | B | C |
| COMPARATIVE EXAMPLE 2 | 130 | 100 | 165 | 395 | ABSENT | NONE | END SURFACE | A-D | C | C |
| COMPARATIVE EXAMPLE 3 | 1000 | 50 | 165 | 1215 | PRESENT | NONE | END SURFACE | A | D | A |

As illustrated in Table 1, in Examples 1 to 12, the "emission luminance" was evaluated as any of "A" to "C", indicating that favorable results were obtained in all cases. Further, in Examples 1 to 12, the "flexibility" was evaluated as any of "A" to "C", indicating that flexibility to the extent that the films can be would into a roll was obtained. Further, in Examples 1 to 12, the "light incident stability" was evaluated as "A" or "B", indicating that favorable results were obtained. The emission luminance was the best in Example 12, followed by Example 10 and Example 11. The emission luminance was higher when a laminated film was provided with a reflective part 60, but sufficient emission luminance was obtained even when the laminated film 10 was not provided with the reflective part 60.

In Comparative Examples 1 and 2, the "light incidence stability" was evaluated as "C", indicating that favorable results were not obtained. In Comparative Example 3, the "light incidence stability" was evaluated as "A", but the "flexibility" was evaluated as "D", indicating that the film exhibited insufficient flexibility to be wound into a roll.

As described above, it was found that in Examples 1 to 12, the laminated films had both good "emission luminance" and "light incidence stability", and also exhibited sufficient "flexibility" to be wound into a roll.

### [Various Other Modifications]

The laminated film 10 according to the embodiment may include a low refractive index layer disposed on one side of the laminated film 10 and having a refractive index lower than that of the light guide layer 1. The low refractive index layer preferably has a refractive index of 1.30 or less. From the viewpoint of reducing the visibility of the laminated film 10 in a state in which the laminated film 10 is disposed on an adherend, it is preferable that the total thickness of the laminated film 10 from the surface of the laminated film 10 on the side opposite to the side on which the low refractive index layer is disposed to the surface of the laminated film 10 on the side on which the low refractive index layer is disposed is 1,500 µm or less.

The adherend on which the laminated film 10 is disposed is not limited to glass, and may be an electronic substrate such as a liquid crystal cell, or a non-light transmissive member such as a ceiling, a wall, or a floor. The light extraction layer 2 does not necessarily extract light L from the side opposite to the side on which the adherend is located, and may extract light L from the side on which the adherend is located. In this case, if the adherend has high light transmissivity, the extracted light L may transmit through the adherend, or if the adherend has low light transmissivity, the adherend may reflect the extracted light.

A base film may be further disposed on the side of the light extraction layer 2 opposite to the side on which the light guide layer 1 is located. This base film may be a hard coat layer or an antireflection layer. Further, a low refractive index layer may be disposed between the light extraction layer 2 and the base film. Alternatively, a low refractive index layer may be disposed between the light guide layer and a base film. From the viewpoint of reducing the visibility of the laminated film 10 in a state in which the laminated film 10 is disposed on an adherend, even when component(s) as described above are present, the thickness of a light guide member is preferably 1,000 µm or less, and more preferably 800 µm or less, 700 µm or less, 600 µm or less, 500 µm or less, 400 µm or less, or 300 µm or less.

The light guide layer 1 and the light extraction layer 2 are not limited to separate films, and the light guide layer 1 and the light extraction layer 2 may be integrated. For example, a light guide layer 1 having patterned recesses may have both the functions of the light guide layer 1 and the functions of the light extraction layer 2.

Although a preferred embodiment has been described in detail above, the present invention is not limited to the above-described embodiment, and various modifications and substitutions may be made to the above-described embodiment without departing from the scope of the appended claims.

Numbers such as ordinal numbers and quantities used in the description of the embodiment are all exemplified to specifically describe the technique of the present invention, and the present invention is not limited to the exemplified numbers. In addition, the connection relationship between the components is illustrated for specifically describing the technique of the present invention, and the connection relationship for implementing the functions of the present invention is not limited thereto.

The laminated film according to the embodiment has high incidence efficiency of light from a light source. Thus, the laminated film according to the embodiment can be used in combination with a light source and disposed on a component of a building, such as glass, a window, a wall, a floor, or a ceiling, so as to illuminate the interior or exterior space of the building. Further, when the laminated film according to the embodiment is disposed in a partition, the laminated film can partition a room or provide privacy for a desired space. Further, when the laminated film is disposed on a glass substrate or the like of a display device, such as a liquid crystal panel or an organic electroluminescent (EL) display panel, the laminated film can be used for applications such as backlight illumination in the display device. Further, the laminated film 10 can be used as a flexible lighting film without being disposed on an adherend. Further, the laminated film according to the embodiment can provide novel applications other than those described above.

The laminated film according to the embodiment and the light source disposed such that light directly enters a light incident surface of the laminated film or enters through a light incident member can form a surface illumination device.

This application is based on and claims priority to Japanese Patent Application No. 2023-092332, filed on June 5, 2023, the entire contents of which are incorporated herein by reference.

Aspects of the present invention are, for example, as follows.
<1> A laminated film in which a plurality of layers are laminated, the laminated film including:
   an end surface along a lamination direction;
   a light incident surface intersecting the end surface and allowing light from a light source to enter;
   a light guide layer configured to guide the light entering through the light incident surface; and
   a light extraction layer including a light extraction part configured to extract the light guided by the light guide layer, wherein
   a thickness between a first surface and a second surface is 1,000 µm or less, the first surface being a surface of the light extraction layer on a side opposite to a side on which the light guide layer is disposed, and the second surface being a surface of the light guide layer on a side opposite to a side on which the light extraction layer is disposed.
<2> The laminated film according to <1>, further including:
   a light incident member disposed on the light incident surface and allowing light from the light source to enter.
<3> The laminated film according to <2>, wherein the light incident member is disposed such that a portion of the light incident member faces the light incident surface and another portion of the light incident member faces the end surface.
<4> The laminated film according to <3>, further including:
   a reflective part disposed on a side of the light incident member opposite to a side on which the light source is located.
<5> The laminated film according to <4>, wherein the reflective part is a reflective sheet disposed on a surface of the light incident member opposite to the side on which the light source is located.
<6> The laminated film according to <1> or <2>, wherein a thickness of the light guide layer is 30 µm or more.
<7> The laminated film according to any one of <1> to <6>, further including:
   a pattern layer disposed between the light guide layer and the light extraction layer and including a first portion and a second portion, the first portion having a refractive index lower than a refractive index of the light guide layer, and the second portion having a refractive index higher than the refractive index of the first portion.
<8> The laminated film according to any one of <1> to <7>, wherein
   an end portion of the light extraction layer is located inward of an end portion of the light guide layer in a plan view, and
   the light incident surface is located in a region of the light guide layer that does not overlap the light extraction layer in the plan view.
<9> The laminated film according to <8>, wherein the light extraction layer is disposed on a side of the light guide layer on which the light source is located.
<10> The laminated film according to <8> or <9>, wherein light from the light surface further enters through the end portion of the light extraction layer.
<11> The laminated film according to <10>, wherein the light extraction layer is disposed in contact with the light source.
<12> The laminated film according to any one of <1> to <11>, wherein the laminated film is formed in an elongated shape so as to be wound into a roll.

### DESCRIPTION OF THE REFERENCE NUMERALS

1 light guide layer
1a end portion
1b, 2b light incident surface
101 first surface
102 second surface
103 end surface
104 upper surface
2 light extraction layer
2a end portion
21 light extraction part
3 adhesive layer
3a end portion
4 pattern layer
401 first portion
402 second portion
10 laminated film
40 tapered member (example of light incident member)
41 bottom surface
42 light incident surface
43 inclined surface
40a prism member (example of light incident member)
41a bottom surface
42a light incident surface
40b first light transmissive member (example of light incident member)
40c second light transmissive member (example of light incident member)
41c first facing surface
42c second facing surface
50 light source
50a light exit surface
60 reflective part
L, L1, L2 light
t1 thickness of laminated film
t2 thickness of light guide layer
D interval between adjacent internal spaces of
plurality of internal spaces in Y direction
E interval between adjacent internal spaces of
plurality of internal spaces in X direction
M length
Px pitch between adjacent internal spaces of
plurality of internal spaces in X direction
Py pitch between adjacent internal spaces of
plurality of internal spaces in Y direction
H height
W width
θa, θb angle

## Claims

1. A laminated film in which a plurality of layers are laminated, the laminated film comprising:
an end surface along a lamination direction;
a light incident surface intersecting the end surface and allowing light from a light source to enter;
a light guide layer configured to guide the light entering through the light incident surface; and
a light extraction layer including a light extraction part configured to extract the light guided by the light guide layer, wherein
a thickness between a first surface and a second surface is 1,000 µm or less, the first surface being a surface of the light extraction layer on a side opposite to a side on which the light guide layer is disposed, and the second surface being a surface of the light guide layer on a side opposite to a side on which the light extraction layer is disposed.

2. The laminated film according to claim 1, further comprising:
a light incident member disposed on the light incident surface and allowing light from the light source to enter.

3. The laminated film according to claim 2, wherein the light incident member is disposed such that a portion of the light incident member faces the light incident surface and another portion of the light incident member faces the end surface.

4. The laminated film according to claim 3, further comprising:
a reflective part disposed on a side of the light incident member opposite to a side on which the light source is located.

5. The laminated film according to claim 4, wherein the reflective part is a reflective sheet disposed on a surface of the light incident member opposite to the side on which the light source is located.

6. The laminated film according to claim 1 or 2, wherein a thickness of the light guide layer is 30 µm or more.

7. The laminated film according to claim 1 or 2, further comprising:
a pattern layer disposed between the light guide layer and the light extraction layer and including a first portion and a second portion, the first portion having a refractive index lower than a refractive index of the light guide layer, and the second portion having a refractive index higher than the refractive index of the first portion.

8. The laminated film according to claim 1, wherein
an end portion of the light extraction layer is located inward of an end portion of the light guide layer in a plan view, and
the light incident surface is located in a region of the light guide layer that does not overlap the light extraction layer in the plan view.

9. The laminated film according to claim 8, wherein the light extraction layer is disposed on a side of the light guide layer on which the light source is located.

10. The laminated film according to claim 8, wherein light from the light surface further enters through the end portion of the light extraction layer.

11. The laminated film according to claim 10, wherein the light extraction layer is disposed in contact with the light source.

12. The laminated film according to claim 1 or 2, wherein the laminated film is formed in an elongated shape so as to be wound into a roll.
